(19) **Europäisches Patentamt / European Patent Office / Office européen des brevets**

(11) **EP 4 611 319 A1**

(12) ## EUROPEAN PATENT APPLICATION

(43) Date of publication:
**03.09.2025 Bulletin 2025/36**

(21) Application number: **25160595.2**

(22) Date of filing: **27.02.2025**

(51) International Patent Classification (IPC):
**H04L 25/06** *(2006.01)*

(52) Cooperative Patent Classification (CPC):
**H04L 25/067**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **01.03.2024 FI 20245257**

(71) Applicant: **Nokia Solutions and Networks Oy 02610 Espoo (FI)**

(72) Inventor: **HOTTINEN, Ari T. Helsinki (FI)**

(74) Representative: **Nokia EPO representatives Nokia Technologies Oy Karakaari 7 02610 Espoo (FI)**

(54) **FAST SYMBOL PROCESSING**

(57) Improvements to a demodulation process or to a demapping process are described. The improvements include that a signal comprising at least one modulated symbol from a labelled symbol constellation is obtained, and reliability information for at least one piece in the labelled symbol constellation is determined, by performing at least one convolution between a kernel and states or a subset of states associated with the labelled symbol constellation, wherein a piece is a symbol label, or a part of a symbol label or a subset comprising parts.

| obtain signal | 〜 401 |

↓

| determine reliability information | 〜 402 |

## *FIG.4*

EP 4 611 319 A1

**Description**

TECHNICAL FIELD

Various example embodiments relate to wireless communications.

BACKGROUND

Demodulation and demapping processes are pertinent to current and future communication systems. For example, inefficient demodulation and demapping architectures and algorithms may lead to higher consumption of resources and/or power and even pose a bottleneck to efficient communication. Hence, any improvement to a demodulation process or to a demapping process is desired.

BRIEF DESCRIPTION

Independent claims define the scope.

According to an aspect there is provided an apparatus comprising at least: means for obtaining a signal comprising at least one modulated symbol from a labelled symbol constellation; and means for determining reliability information for at least one piece in the labelled symbol constellation, by performing at least one convolution between a kernel and states or a subset of states associated with the labelled symbol constellation, wherein a piece is a symbol label, or a part of a symbol label or a subset comprising parts.

In embodiments, the apparatus may further comprise: means for performing discretization of the signal to a grid having a predetermined grid size with a determined density; means for determining the kernel based on information on additive noise and/or imperfections affecting the received signal; means for performing a first convolution between the kernel and a first set of states of the symbol constellation; and means for performing a second convolution between the kernel and a second set of states of the symbol constellation; wherein the means for determining reliability information are configured to determine reliability information associated with the set of labels based on the output the at least first and the second convolutions.

In embodiments, the apparatus may further comprise: means for obtaining weights for constellation points or different partitions thereof in the labeled constellation; and means for associating constellation points or different partitions thereof with the weights, wherein the means for performing discretization of the signal are configured to use the constellation points with corresponding associated weights.

In embodiments, the means for obtaining weights may be configured to receive them from an entity in the apparatus and/or to determine the weights in an iteratively manner.

In embodiments, the apparatus may further comprise means for determining a discrete mask of the signal, wherein the means for performing a first convolution and/or the means for performing a second convolution are configured to calculate a dot product of the Fourier transformed elements of the weights and the Fourier transformed elements of the discrete mask and to use inverse Fourier transformation to the dot product to obtain the convolution output.

In embodiments, a size of the discrete mask may be equal to the predetermined grid size.

In embodiments, the grid may be denser than the labeled symbol constellation.

In embodiments, the apparatus may further comprise means for associating the reliability information with at least one of log likelihood computation and/or for interference cancellation and/or a posteriori mean computation and/or probability density computation and/or for channel estimation.

In embodiments, the apparatus may further comprise means for obtaining or receiving constellation information with weights for constellation points.

In embodiments, the kernel may be a Gaussian kernel or discretized Gaussian kernel.

In embodiments, values of the kernel may depend on at least one parameter of additive noise, multiplicative noise, or received signal power, or both.

In embodiments, label values for the labelled symbol constellation may be determined based at least one of a constellation received from a source node of the signal, superposition of two or more constellations, imperfections at the apparatus when the signal is received, or indicated imperfections at the source node.

In embodiments, the means for determining reliability information may be configured to perform the convolution as a fast convolution, in which the convolution is computed separately in at least two marginals using a lower dimensional fast convolution.

In embodiments, the apparatus may further comprise means for performing binning or quantizing or both binning and quantizing the signal to at least one grid point.

In embodiments, the apparatus further may comprise at least one processor, and at least one memory including computer program code, wherein the at least one processor with the at least one memory and computer program code provide said means.

According to an aspect there is provided a method comprising: obtaining a signal comprising at least one modulated symbol from a labelled symbol constellation; and determining reliability information for at least one piece in the labelled symbol constellation, by performing at least one convolution between a kernel and states or a subset of states associated with the labelled symbol constellation, wherein a piece is a symbol label, or a part of a symbol label or a subset comprising parts.

According to an aspect there is provided a computer readable medium comprising program instructions which, when executed by an apparatus, cause the apparatus to perform at least: obtaining a signal comprising at least one modulated symbol from a labelled symbol constellation; and determining reliability information for at least one piece in the labelled symbol constellation, by performing at least one convolution between a kernel and states or a subset of states associated with the labelled symbol constellation, wherein a piece is a symbol label, or a part of a symbol label or a subset comprising parts.

In an embodiment, the computer readable medium is a non-transitory computer readable medium.

According to an aspect there is provided a computer program comprising instructions which, when executed by an apparatus, cause the apparatus to perform at least: obtaining a signal comprising at least one modulated symbol from a labelled symbol constellation; and determining reliability information for at least one piece in the labelled symbol constellation, by performing at least one convolution between a kernel and states or a subset of states associated with the labelled symbol constellation, wherein a piece is a symbol label, or a part of a symbol label or a subset comprising parts.

BRIEF DESCRIPTION OF DRAWINGS

Embodiments are described below, by way of example only, with reference to the accompanying drawings, in which

Fig. 1 illustrates an exemplified communication system;
Fig. 2 illustrates an example of modelling signal states;
Fig. 3 illustrates an example of -labelled 64 quadrature amplitude modulation;
Figs. 4 to 7 are flow charts illustrating example functionalities;
Figs. 8 to 15 illustrate different examples relating to 64 quadrature amplitude modulation constellation; and
Figs. 16 and 17 are schematic block diagrams.

DETAILED DESCRIPTION OF SOME EMBODIMENTS

The following embodiments are examples. Although the specification may refer to "an", "one", or "some" embodiment(s) in several locations, this does not necessarily mean that each such reference is to the same embodiment(s), or that the feature only applies to a single embodiment. Single features of different embodiments may also be combined to provide other embodiments. Furthermore, words "comprising" and "including" should be understood as not limiting the described embodiments to consist of only those features that have been mentioned and such embodiments may contain also features/structures that have not been specifically mentioned. Further, although terms including ordinal numbers, such as "first", "second", etc., may be used for describing various elements, the structural elements are not restricted by the terms. The terms are used merely for the purpose of distinguishing an element from other elements.

Various example embodiments described herein relate to methods and systems for demodulation, detection, or demapping of signals received from a communication channel or obtained otherwise for processing.

In a receiver, a demodulator may process received symbols, and may make decisions indicating reliability, probabilities, likelihood, or further derived quantities, such as log-likelihood ratios, a posteriori probabilities, weighted symbol estimates, associated with transmitted symbols or symbol subsets. The subsets may be associated or tagged with labels, such as binary sequences, bit labels. The receiver determines, detects, demaps or demodulates the symbols or the bits associated with received symbols, often as soft values, representing reliabilities. It is to be noted that terms "determines", "detects)", "demaps", and "demodulates", when related to received symbol(s) or bit(s) associated with received symbol(s), are used herein as synonyms, i.e. they are interchangeable. The received symbol is typically corrupted by communication channel induced noise, receiver inducted noise or imperfections, transmitter induced imperfections, interference and the like. Accurate, fast computation of reliability information, or detection of symbols or bits, is important e.g. since the (soft bit/symbol) decisions are often used as input to another receiver unit, such as channel decoder unit and/or a channel estimator unit.

Herein different examples are described for demodulation based on fast convolution, optionally including Fourier-domain processing. Following is a short summary: A computing device comprising one or more demodulators, or one or more demodulation units, may receive a symbol comprising one or more values. The computing device may input, to the one or more demodulators, the one or more values. The computing device may demap or demodulate, using the one or more demodulators, and based on the one or more values, the symbol to generate one or more confidence scores corresponding to one or more bits indicated by the symbol. The computing device may send, to a decoder, to a channel estimator, or to an external unit the one or more confidence scores. It should be noted that herein confidence scores are used as a non-limiting example of reliability information, and instead of term "confidence score" term "reliability information" can be used as well.

In some examples, the one or more confidence scores or reliability information may determine one or more log-likelihood ratios, symbol or bit probabilities, or further derived quantities like a posteriori mean, that the one or more bits (associated with a symbol) correspond to one or more ones or one or more zeros, or other similar discrete labels associated with the states of an obtained symbol.

In some examples, each of the one or more demodulators may comprise an input corresponding to a received signal. Each of the one or more demodulators may comprise information of a received signal constellation associated with a received symbol. The received signal constellation may have a plurality of signal states, and they are generally related albeit not identical to a transmitted constellation state(s), due to a communication channel or due to various hardware/software imperfections (such as superimposed interference, transmitter imperfections, receiver imperfections, e.g. nonlinear power amplifiers, I/Q imbalance, phase noise, Doppler, etc).

The aforementioned problems are especially prevalent in future communication systems, where the receiver is faced with a very large number of signal states. Large number of signal states arise e.g. due to use of very high order constellations in high rate communication systems (e.g., 64-QAM (quadrature amplitude modulation), 4096-QAM, a shaped constellation of high order, etc), by receiving at least two superimposed signals (e.g. and interference signal; or multiple desired signals) typical in a multiple access channel or MIMO (multiple input multiple output) channel, or in multipath propagation. A receiver's resilience to imperfections and noise should be maintained in such scenarios. As part of resilience, the receiver should be able to determine reliability information efficiently, and preferably in manner that enables it to take into account also at least some of the imperfections when computing the reliability information.

In some examples, each of the one or more demodulators may comprise a plurality of parameters. The computing device may estimate or train, or be provided with, e.g. based on additional reference symbols and by adjusting the plurality of parameters, each of the one or more demodulators, such that confidence scores, generated by the demodulators or demappers are improved. In some examples, based on detecting a change in network or link conditions, the computing device may update the one or more parameters. In some examples, the computing device may periodically update the parameters, in response to reference symbols, prior detected symbols (as in decision feedback), estimated or provided information on constellation and/ or imperfections, or noise level, e.g., continuously, when needed, or by using an updating frequency.

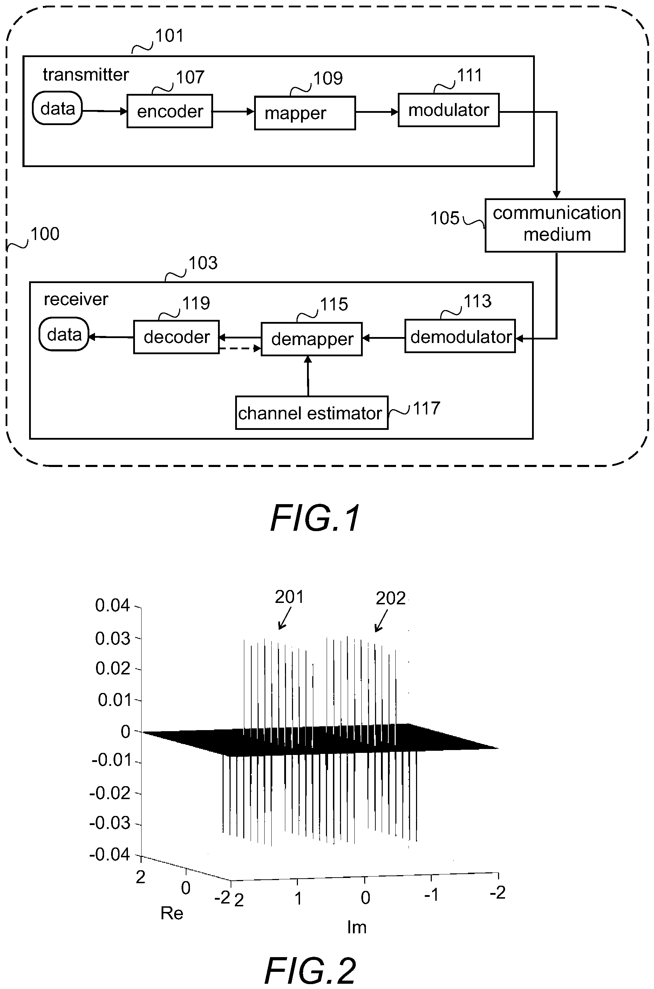

Fig. 1 is a schematic diagram showing an example communication system 100 in which features described herein may be implemented. The system may comprise one or more transmitters (e.g., transmitter 101), one or more receivers (e.g., receiver 103), and one or more communication media (e.g., communication medium 105). The transmitter 101 may be configured to send information to the receiver 103 via the communication medium 105.

The transmitter 101 may comprise, for example, a wireless transmitter, a wired transmitter, an optical transmitter, a telecommunications transmitter, a Wi-Fi transmitter, a Bluetooth transmitter, a cellular network transmitter, a fifth generation wireless systems (5G) transmitter, a television radio transmitter, a Data Over Cable Service Interface Specification (DOCSIS) transmitter, a digital subscriber line (DSL) transmitter, a G.fast transmitter, or any other type of device configured to send information. The transmitter 101 may be implemented, or comprised, in any type of a computing device, such as a smartphone, a cell phone, a mobile communication device, a personal computer, a server, a tablet, a desktop computer, a laptop computer, a gaming device, a virtual reality headset, a base station, a television, a node in a fibre or wireless/cellular network.

The transmitter 101 may implement various modulation methods, such as pulse-amplitude modulation (PAM), quadrature amplitude modulation (QAM), modulation methods based on constellation diagrams, and/or other types of modulation methods. The transmitter 101 may comprise, for example, one or more encoders (e.g., encoder 107), one or more mappers (e.g., mapper 109), and one or more modulators (e.g., modulator 111). The transmitter 101 may comprise additional and/or alternative components for carrying out functions of the transmitter 101. If multiple transmitters are present, they may each employ the same or different modulation methods.

The encoder 107 may be configured to obtain data (e.g., binary digits of information) to be sent to the receiver 103, and to convert the data into another code. For example, the encoder 107 may convert data into an error detection and/or correction code or error correction and/or error detection codewords, using a repetition code, a parity bit code, a checksum code, a Hamming code, a binary Golay code, a low-density parity-check code, Polar code, Turbo code, etc.

The mapper 109 may be configured to map the output of the encoder 107 to symbols used in modulation (e.g., PAM, QAM, Probabilistically/Geometrically shaped constellation, etc.). The symbols may be represented by points on a constellation diagram of a modulation method. Each symbol may comprise one or more values. For example (e.g., in QAM), a first value of a symbol may correspond to an in-phase component, and a second value of the symbol may correspond to a quadrature component. Such a symbol may be represented by a complex number (e.g., -1+3j). Each possible symbol or symbol state may have some prescribed a priori probability, e.g. if probabilistically shaped constellation is used in the mapper. Naturally, the constellation is typically scaled in the transmitter so as to meet power, energy requirements at the transmitter and/or the receiver.

The transmitter may employ, for example, joint coding and modulation, coded modulation, or e.g. bit-interleaved coded modulation (BICM).

The modulator 111 may be configured to convert (e.g., modulate) the symbols output by the mapper 109 onto carrier signals (e.g., carrier pulses, carrier waves, etc.), and may generate modulated signals carrying the symbols. For example (e.g., in QAM), the modulator 111 may change the amplitudes of two carrier waves (e.g., of the same frequency and out of phase with each other by 90 degrees) according to two corresponding values of a symbol output by the mapper 109, and may add the two modulated carrier waves together for sending via the communication medium 105. In the context of the current invention, the mapper can be arbitrary. For example, the mapper may apply probabilistically and/or geometrically shaped constellations.

The communication medium 105 may comprise, for example, wire, cable, fiber, microwave, satellite, radio, infrared, or any other type of communication medium. Signals (e.g., from the transmitter 101) may propagate through the communication medium 105. Noise may be added to the signals and impairments may affect the transmitted constellation so that the effective received constellation is not identical to the transmitted constellation. The added noise may comprise, for example, additive white Gaussian noise (AWGN), attenuation, phase-shift, etc. Impairments, like a nonlinear amplifier, and/or I/Q imbalance may squeeze or deform the constellation, as seen by the receiver. A signal may be transmitted via the communication medium 105 from the transmitter 101 to the receiver 103.

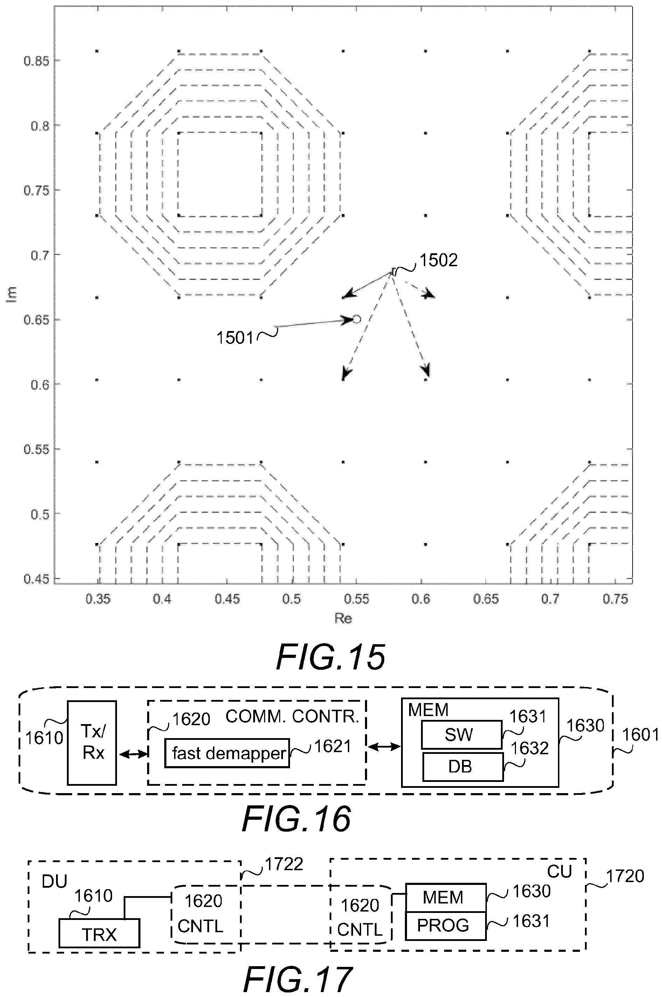

The receiver 103 may comprise, for example, a wireless receiver, a wired receiver, an optical receiver, a telecommunications receiver, a Wi-Fi receiver, a cellular network receiver, a 5G receiver, a 6G receiver, a 7G receiver, a television radio receiver, a DOCSIS receiver, a DSL receiver, a G.fast receiver, or any other type of device configured to receive information. The receiver 103 may be implemented, or comprised, in any type of computing device, such as a smartphone, a cell phone, a mobile communication device, a personal computer, a server, a tablet, a desktop computer, a laptop computer, a gaming device, a virtual reality headset, a base station, a television, a drone, a vehicle, an automated guided vehicle, an autonomous connected vehicle, a vehicle-mounted wireless terminal device, a wireless endpoint, an internet of things device, an industrial internet of things device, an on-person device, a wireless access point, a transmission-reception point, the computing device as described in connection with Fig. 16 and Fig. 17, etc.

The receiver 103 may be configured to demodulate signals received from the transmitter 101, and to obtain the data sent by the transmitter 101. The receiver 103 may comprise, for example, one or more demodulators including radio frequency, which measures electromagnetic radio waves, (e.g., demodulator 113), one or more demappers (e.g., demapper 115), one or more channel estimators (e.g., channel estimator 117), and one or more decoders (e.g., decoder 119). The receiver 103 may comprise additional and/or alternative components for carrying out functions of the receiver 103. For example, channel equalizer (not shown) or interference cancellation (not shown) may be implemented, in the receiver 103, to process received signals.

The demodulator 113 may be configured to convert (e.g., demodulate) a signal received from the transmitter 101 via the communication medium 105, and may generate one or more demodulated symbols corresponding the received signal. For example (e.g., in QAM), the demodulator 113 may multiply the received signal separately with a cosine signal and/or sine signal (e.g., of the same frequency as the received signal) to generate estimates of the values of symbols carried by the received signal.

The channel estimator 117 may be configured to estimate the condition or a state, such as a channel gain channel amplitude, noise characteristics, or the like of a communication channel, and may send the estimation to the demapper 115. For example, the channel estimator 117 may monitor the condition of a communication channel between the mapper 109 and the demapper 115. In some examples, the channel between the mapper 109 and the demapper 115 may be represented by $r = hs + CN(0, \sigma^2)$, where r may represent the output of the channel (e.g., the symbol received by the demapper 115), $s$ may represent the input of the channel (e.g., the symbol sent by the mapper 109), $h$ may represent the channel gain, and $CN(0, \sigma^2)$ may represent the AWGN of the channel with a zero (0) average and a $\sigma^2$ variance. The channel gain $h$ and the channel AWGN variance $\sigma^2$ may, for example, be monitored by the channel estimator 117 using any type of channel estimation method (e.g., using a reference signal and/or a signal commonly known to the transmitter 101 and the receiver 103), and may be sent to the demapper 115 (e.g., for determining bit probabilities or log-likelihood ratios or similar reliability quantities or confidence scores). The demapper may also use an estimate of channel h, using maximal ratio combining, channel equalization, and similar techniques. As an example, the signal may be scaled using channel information to a some prescribed average power and phase.

In a MIMO/MISO channel (multi-antenna system, or multiple access system), the signal model is essentially the same, only in vector-matrix form $r = Hs + n$, where $H$ is not a complex scalar, but either a vector or a matrix whose dimensions depend on the number of multiplexed signals, MIMO streams, number of antennas, etc. In such a case, each received signal, say first element of $r$, may experience a superposition of two or more transmitted signals (effective dimensionality of $s$ is at least 2) thereby increasing the number of possible received signal states at each coordinate of $r$.

However, if the signal model is known via estimation, a received constellation, although it is then generally channel dependent, may be provided to the to the demapper.

As will be explained in more detail below, the demapper 115 may comprise a soft demapping function to generate one or more confidence scores corresponding to one or more bits indicated by a symbol received from the demodulator 113. A confidence score corresponding to a bit may indicate a level of confidence in a determination that the bit corresponds to a one (1) or a zero (0). A soft demapping function for determining a confidence score based on a log-likelihood ratio $L(b_i|r)$ is shown below in equation (1):

$$L(b_i|r) = \log \frac{\sum_{s \in O_i^1} exp\left(-\frac{|r - hs|^2}{2\sigma^2}\right)}{\sum_{s \in O_i^0} exp\left(-\frac{|r - hs|^2}{2\sigma^2}\right)} \qquad (1)$$

In equation (1), which assumes that all states (and thus typically also all bits that map to these states are equiprobable, $r$ may represent a received symbol (e.g., representable by a complex number), $b_i$ may represent the $i^{th}$ bit indicated by the symbol of the modulation alphabet (bit-symbol association depend on labelling, e.g. Gray labelling may be used), $L(b_i|r)$ may represent the log-likelihood ratio of the $i^{th}$ bit label indicated by the received symbol, $s$ may represent a symbol in the modulation constellation diagram used, $O_i^1$ may represent a set of constellation symbols the $i^{th}$ bits of which correspond to ones (1), $O_i^0$ may represent a set of constellation symbols the $i^{th}$ bits of which correspond to zeros (0), $h$ may represent the channel gain, and $\sigma^2$ may represent the variance of the channel AWGN. For example, a higher log-likelihood ratio corresponding to a particular bit may indicate a higher confidence level that the bit corresponds to a one (1), and a lower log-likelihood ratio corresponding to the bit may indicate a higher confidence level that the bit corresponds to a zero (0).

A log-likelihood ratio may additionally or alternatively be approximated according to the following equation:

$$L(b_i|r) \cong \frac{1}{2\sigma^2}\left[\min_{s \in O_i^0}|r - hs|^2 - \min_{s \in O_i^1}|r - hs|^2\right] \qquad (2)$$

Equation (2) may be an approximation of the exact equation (1) for determining log-likelihood ratios. The approximation equation (2) may avoid the exponential and/or logarithmic operations associated with the equation (1). For a constellation (e.g., associated with PAM, QAM, etc.) comprising $2^m$ constellation symbols (e.g., m bits per symbol), the approximation equation (2) may require $O(2^m)$ operations.

With *a priori* information on at least some of the labelled bits, assuming for simplicity, independence for these bits (and thus justifying product-form below), we may write

$$L(b_i|\boldsymbol{r}) = \log \frac{\sum_{i:\, s \in O_i^1} exp\left(-\frac{|\boldsymbol{r} - \boldsymbol{hs}_i|^2}{2\sigma^2}\right)\prod_{i' \neq i} \Pr(b_{i'})}{\sum_{i:\, s \in O_i^0} exp\left(-\frac{|\boldsymbol{r} - \boldsymbol{hs}_i|^2}{2\sigma^2}\right)\prod_{i' \neq i} \Pr(b_{i'})} \qquad (3)$$

Equation (3) may be applied, e.g., in connection with probabilistically shaped constellations where a priori probabilities are stipulated by a transmitter mapper, and/or e.g. in bit-interleaved coded modulation (BICM) systems (typically using iterative decoding-detection receivers), where the independence assumption may be justified by appropriate bit interleaving at the transmitted and the receiver, as is known in the art. An iterative receiver may obtain the *a priori* probabilities (for a given next iteration) Pr ($b_{i'}$) from another receiver module, e.g., from soft input soft output channel decoder (e.g. soft output Viterbi decoder), from Maximum A Posteriori decoder, or similar, and compute the log-likelihood ratio either in parallel, or sequentially, in an iterative receiver process.

Note that in equations (1) and (2) a priori information of bit i is intentionally neglected, for reasons of clarity. That is, the equation above explicitly captures so called extrinsic information. A priori information pertaining for bit i may be accommodate by an additive term (in log-likelihood) or a multiplicative term (for likelihood or for conditional density weighting).

Computations of log-likelihood reliability measures of equations (1) and (3) are known in the art. They are based, essentially, on the knowledge of signal states and by explicitly computing distances to all selected signal states (as is apparent in summations or min-distance determinations in the nominator and denominator in equations (1) and (3)). As a technical disadvantage, there are exponentially many terms in the summands of equations (1) and (3). When the number of signal states (and consequently the number of terms in the sum or required number of distance evaluations) increases, as is necessary for high order or high rate modulation schemes (like 1024 QAM or 4096 QAM, for example), the computational complexity of the receiver increases dramatically. On the other hand, reduced complexity receivers (see e.g. equation (2)), the approximation using only a few states may be poor, which results in inefficient use of the channel. It is to be noted that especially when the channel noise is high (signal-to-noise ratio, SNR, is low), use of only equation (2) may be especially inaccurate. Furthermore, in coded modulation or BICM transmission schemes, as well in channels with interference, the number of effective signal states may be extremely high while simultaneously having a low SNR per received symbol.

A further disadvantage of solutions of equations (1) and (2) is that when, for example, channel noise (or SNR) changes, as is likely e.g. 5G or Wi-Fi wireless systems that use OFDM (orthogonal frequency-division multiplexing) or multi-carrier modulation, equations like (1) and (2) need to be recomputed from scratch. As an example, in a frequency-selective channel each subcarrier of an OFDM system may experience different noise level or signal-to-noise ratio. The same applies to situations where bit- a-priori-probabilities vary e.g. in an iterative receiver - the computations for LLRs need to be recomputed in each iteration. Thus, an improved accurate demodulation/demapping technique with reduced computational complexity and adaptability for any labelling scheme, any set-partitioning scheme, and efficient support for use of a priori information is desired. The examples described herein provide such an improved demodulation/demapping technique, called herein fast demodulation or fast demapping.

Generally for coded modulation, instead of the product form of a priori probabilities for states (i.e., typically associated with sequences of bit labels), more general ways of computing state probabilities may be used. For example, the probabilities may be computed by assuming the label probabilities depend on each other due to some encoding operation in the transmitter, for example. The illustrative exposition below assumes state-specific weights that capture e.g. a priori information computed in any manner.

Reliability quantities or confidence scores are computed, by the demapper 115, and they may be sent to the decoder 119. The decoder 119 may be configured to decode received symbols, or a subset thereof e.g. for a given MIMO stream/layer or for a desired user, and to determine the data sent by the corresponding transmitter 101, for example, in connection with the demapper 115 and using any type of soft-decision algorithm, such as maximum a posteriori (MAP) decoding of error correction codes, etc. Based on the confidence scores as determined by the demapper 115, the decoder 119 may decode the error correction code associated with the received symbols, and may determine the data sent by the transmitter 101 (e.g., data prior to being encoded by the encoder 107). In some examples, the decoder 119 may be configured to determine constellation weights and input them, as depicted by the dashed arrowhead line in Fig. 1, to the demapper 115.

As an example of a process that may be implemented according to features described herein, data (e.g., four bits 0110) may be sent to the encoder 107. The encoder 107 may convert the data (e.g., 0110) into another code. For example, the encoder 107 may use a repetition code to encode the data (e.g., 0110), and may generate 01100110. The output of the encoder 107 (e.g., 01100110) may be sent to the mapper 109. The mapper 109 may map 01100110 to one or more symbols, for example, based on a correspondence between bit sequences and symbols.

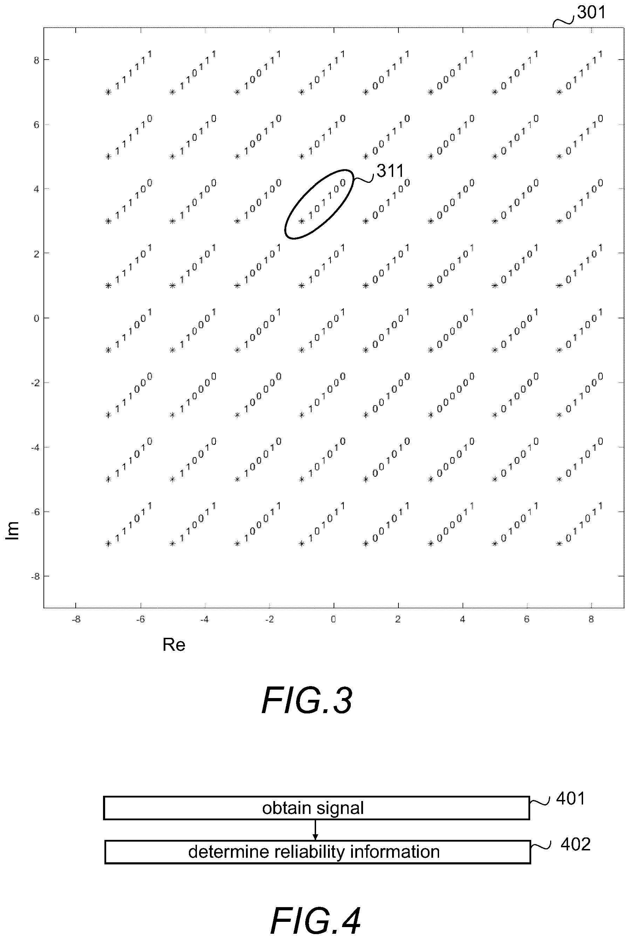

Fig.3 shows an example constellation diagram 301 and an example correspondence between bit sequences and symbols (e.g., implemented by the mapper 109). The constellation diagram 301 may comprise one or more axes (e.g., a horizontal real axis and a vertical imaginary axis). The constellation diagram 301 may be regarded as a complex plane. Each symbol (e.g., a complex number) on the constellation diagram 301 may correspond to a bit sequence. For example, a symbol 151 (e.g., -1+3j) may correspond to a bit sequence 0110. The mapper 109 may, for example, map the output of the encoder 107 (e.g., 01100110) to two symbols -1+3j, -1+3j. The mapper 109 may send the two symbols to the modulator 111. The modulator 111 may modulate the symbols (e.g., with an in-phase carrier signal and a quadrature carrier signal), and may send the modulated signal to the demodulator 113 via the communication medium 105.

The demodulator 113 may demodulate the received signal, and may generate two demodulated symbols (e.g., -0.76+1.3j, -1.1+2.15j). The demodulated symbols may be different than the two symbols generated by the mapper 109 (e.g., because of channel noise). The demapper 115 may receive the demodulated symbols, and may determine confidence scores for the demodulated symbols. For example, the confidence scores for the four bits of the first demodulated symbol may be -0.7, 1.3, 0.1, -1.4, and the confidence scores for the four bits of the second demodulated symbol may be -3.1, 0.7, 1.1, -2.3. A higher confidence score corresponding to a bit may indicate the bit is more likely to be a one (1). A lower confidence score corresponding to a bit may indicate the bit is more likely to be a zero (0). A zero confidence score corresponding to a bit may indicate that the bit is equally likely to be a one (1) or a zero (0). The confidence scores as determined by the demapper 115 may be sent to the decoder 119. The decoder 119 may determine, based on the confidence scores, data (e.g., 0110) corresponding to the data that was input to the encoder 107 (e.g., 0110).

The conditional densities (or more generally, conditional measures, if they need not integrate to 1) in BICM-type systems, may be represented (in the particular example of a d-dimensional Gaussian density) as equations of the form

$$f(b_i = 1 \,|r) = \frac{1}{\sqrt{(2\pi)^d}\,\sigma^d} \sum_{i:\, s \in O_i^1} exp\left(-\frac{|\boldsymbol{r} - \boldsymbol{h}\boldsymbol{s}_i\,|^2}{2\sigma^2}\right) \prod_{i' \neq i:i,i';s \in O_i^1} \Pr(b_{i'}) \quad (4)$$

$$f(b_i = 0 \,|r) = \frac{1}{\sqrt{(2\pi)^d}\,\sigma^d} \sum_{i:\, s \in O_i^0} exp\left(-\frac{|\boldsymbol{r} - \boldsymbol{h}\boldsymbol{s}_i\,|^2}{2\sigma^2}\right) \prod_{i' \neq i;s \in O_i^0} \Pr(b_{i'}) \quad (5)$$

Equations (4) and (5) of the form, or type, serve as alternative or intermediate confidence scores in their own right. Efficient computation of these quantities, or their approximations, directly (rather than approximating logarithms of their fraction as is customary in LLR approximations), leads to computational advantages that are herein exploited in fast demodulation. Indeed, these functions, e.g., label (bit)-conditional probability densities, are of a similar form as mixture Gaussian densities. As an example, each state (or signal point) of s in $O_i^1$ or $O_i^0$ represents in this example the center (mean value) for a term in a Gaussian mixture, the noise power represents the (co)variance, and the associated a priori probabilities (product form or more general) represent the probabilities or the weights for said states. If the a priori probabilities are different, some exponential terms are weighted more, relative to others, in the mixture distribution.

Computational advantages may be realized in part since the functional form of conditional bit densities in equations (4) and (5), for example, may be written in terms of kernel functions and their associated weights often used in statistics, e.g. in non-parametric density estimation, see, e.g., Gramacki, J., Gramacki, A. (2017), "A Complete Efficient FFT-Based Algorithm for Nonparametric Kernel Density Estimation", published in: Rutkowski, L., Korytkowski, M., Scherer, R., Tadeusiewicz, R., Zadeh, L., Zurada, J. (eds) Artificial Intelligence and Soft Computing. ICAISC 2017. Lecture Notes in Computer Science(), vol 10246. Springer, Cham. https://doi.org/10.1007/978-3-319-59060-8_7. When is statistics applications the kernel function and its computation is selected essentially based on estimation-theoretic considerations, in the solutions disclosed herein the kernel(s) and/or their weight can be selected so as to model uncertainties in the channel or imperfections in the transmitter or the receiver and the kernel positions are essentially defined by information on received or transmitted constellation(s), sub-partitions of the signal space (or constellations), and like.

As an example, in an average white Gaussian (AWGN) channel (as is assumed in previous examples), when considering a particular constellation state $\boldsymbol{s}_i$, it is natural to use a (as a non-limiting example) Gaussian kernel $K$ (or some associated discretization thereof at sampling or grid points, for example), and weights $w_{i,0/1}$ (note that weights can be different for label 1 and for label 0 and different for different bit-label indices (i)) e.g. as

$$K_{\sigma^2}(\boldsymbol{r} - \boldsymbol{s}_i; \boldsymbol{h}) = \frac{1}{\sqrt{(2\pi)^d}\,\sigma^d}\, exp\left(-\frac{|r - hs_i|^2}{2\sigma^2}\right).$$

The normalization term $\frac{1}{\sqrt{(2\pi)^d}\,\sigma^d}$ is not always relevant e.g. if LLRs are computed (as it often appears in both the nominator and the denominator and thus may cancel out). Then, the conditional density/measure, of receiving signal **r,** for which i'th bit-label being zero is a weighted average computed over the states where said bit label is zero and with generic weights $\{w_{i,0}(\boldsymbol{O}_i^0)\}$ and $\{w_{i,1}(\boldsymbol{O}_i^1)\}$:

$$\mathrm{f}\big(\mathbf{r};\, \mathbf{h}, \boldsymbol{O}_i^0, \{w_{i,0}(\boldsymbol{O}_i^0)\}\big) = \sum_{i:\, i \in o_i^0} w_{i,0} K_{\sigma^2}(\boldsymbol{r} - \boldsymbol{s}_i; \boldsymbol{h}), \quad (6)$$

Similarly, one may compute, typically for a different set of states, the conditional density/measure for the hypothesis that the i'th bit-label being one;

$$\mathrm{f}\big(\mathbf{r};\, \mathbf{h}, \boldsymbol{O}_i^1, \{w_{i,1}(\boldsymbol{O}_i^1)\}\big) = \sum_{i:\, s_i \in o_i^1} w_{i,1} K_{\sigma^2}(\boldsymbol{r} - \boldsymbol{s}_i; \boldsymbol{h}). \quad (7)$$

Thus, the signal-state-partitions $\{O_i^1, O_i^0\}$ i=1,...,I, the channel, and the partition-dependent weights $\{w_{i,0}(O_i^0)\}$ and $\{w_{i,1}(O_i^1)\}$ of each state in each partition need to be determined or estimated or otherwise provided as input. Similar process is done for each bit-label, i. Weights may be determined, e.g., to reflect the (relative) probability of each state $s_i$ for each partition.

As an example, computation of functions like (6) and (7) may be carried out by using convolution operations. Indeed, one may write, as an example considering equation (7),

$$\sum_{i:\,s_i \in O_i^1} w_{i,1} K_{\sigma^2}(r - s_i; h) = \sum_{i:\,s_i \in O_i^1} w_{i,1} K_{\sigma^2}(r) * \mathrm{d}(r - s_i), \qquad (8)$$

where d() is the delta function and where symbol '*' denotes convolution.

In a demodulator the obtained symbols **r** are typically represented with a large number of bits (high resolution). This defines essentially a very dense discretization of the signal space (denoted by R) to minimize compression or representation loss. With such high resolution, a direct evaluation of $2^{l-1}$ summands in the left-hand-side of example of eq (8), say, can be costly.

However, in demodulation or demapping, to simplify processing, one may alternatively use a quantization grid with fewer states, or at most with the same number of states as is used to represent the received symbol or received signal, or the weights representing the a priori probabilities. Use of a quantization grid is suitable for fast convolutional processing, as it is convenient to model the constellation state probabilities or weights in a grid of signal states, or for selected constellation states in such a grid. For example, elements of a sparse matrix may be associated with weights for each or for selected signal states. As an illustrative example, constellation states may be partitioned to two more subsets depending on the value the $i^{th}$ binary label in said constellation with $2^l$ states. These subsets may be denoted by $O_i^1$ and $O_i^0$, i=,...,I. regardless of how these states (constellation points or their labels) are defined - e.g, if the they follow, bit or sub-symbol-level partitioning, or any particular predetermined labelling scheme, like Gray labelling, Ungerboeck/set-partition labeling etc. As an example, if the states are considered equiprobable (e.g. transmitted bits are equiprobable in QAM), then the weights are the same, otherwise (generally) not. Fig. 2 illustrates an example of weighted partitions $O_3^1$ and $O_3^0$ for bit label 3 of 64 QAM having two sets 201, 202 of 32 equiprobable states (same height for each state in bit partitions of 64QAM constellation depicted in a real axis Re and an imaginary axis Im) using a quantization grid of size 512x512. This results in a sparse matrix where non-zero values are only at (received/tentative) constellation points. Here, for illustrative purposes, the weights for partition when $3^{rd}$ bit having value 0 are multiplied by value -1 so that both partitions can illustrated simultaneously, to be able visualize clearly the two sets 201, 202). Here, since the states are equiprobable, the weights have the same magnitudes, as depicted.

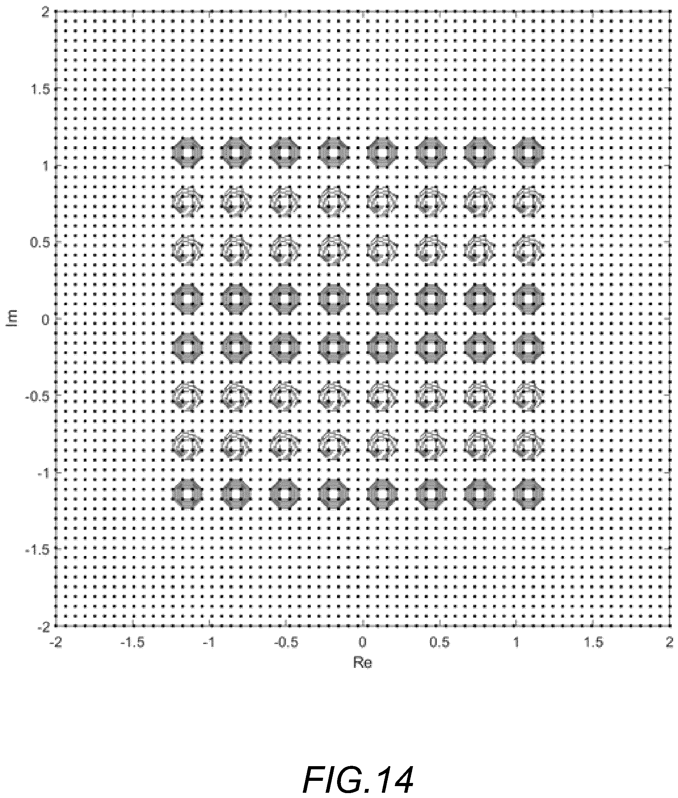

Computation may be carried out in a less dense quantization grid of some prescribed granularity, size, or density. A denser grid typically has higher computational cost compared to a less dense grid, but it also results in more accurate modelling and thus better reliability values. Having determined the grid, a received signal r is binned to at least one point in T (see Figs. 14 and 15, where 64x64 grid is used, arrowhead line 1501 in Fig. 15 pointing to a received signal r and 1502 in Fig.15 refers to arrowhead lines pointing to a set of closest points, the unbroken arrowhead line pointing to the closest point.). Binning entails, for example, assigning a fraction of signal r value to a set of closest points in a grid, e.g. in proportion or in dependence of distance to the determined closest points. In a simple solution, only the closest grid point is selected to represent the received signal r. Subsequent processing may then be done on the selected grid. The constellation states may be represented even with a less dense grid as it has fewer states, but for convolutional processing the constellation states should be preferably be represented in the same grid. With QAM modulation states, the states generally are representable in a regular grid in dependence of the number of states in the constellation.

Defining and computing the relevant demodulation/demapping related functions on discrete grid enables the use of discrete convolution for the purpose of soft demapping. Discrete convolution may be carried out essentially by convolving a multi-dimensional mask over the prescribed multi-dimensional signal states. A particular implementation involves the use of one or multi-dimensional discrete Fourier transforms (DFT), or one or multi-dimensional Fast Fourier transforms (FFT).

As an example, returning to eq (8), the term

$$\sum_{i:\,s_i \in O_i^1} w_{i,1} K_{\sigma^2}(r) * \mathrm{d}(r - s_i)$$

may be evaluated on a (uniform) discrete grid such as T by evaluating equation (function)

$$K_{\sigma^2}(\tilde{r}) \sum_{i:\, s_i \in o_i^1} w_{i,1} * \mathrm{d}(\tilde{r} - s_i) \qquad\qquad (9)$$

on a set of grid points $\{\tilde{r}\}$, after binning. Above, it is assumed that the kernel is the same for each signal state. This is weak assumption since typically all modulation symbols experience statistically the same additive noise process, as is typical in a Gaussian channel. Fast convolution results since the summand in equation (9) is essentially that of a convolution of state-dependent weights with a (weighted) dirac delta functions that spike only at selected constellation points. By the convolution theorem, evaluating such functions on a (regular) grid, entails computing a Fourier Transform of the kernel K() on the grid point(s), computing the Fourier transform of the summand of equation (9) on the same grid point(s), taking an elementwise product, and then computing an inverse (Fast/Discrete) Fourier transform the output of the elementwise product. Thus, it may be computed essentially as

$$\mathrm{f}(\tilde{r}) = \mathrm{IDFT}(\mathrm{DFT}(K_{\sigma^2}(\tilde{r}) \,\vcenter{\hbox{$\ast$}}\, \mathrm{DFT}\left(\sum_{i:\, s_i \in o_i^1} w_{i,1} * \mathrm{d}(\tilde{r} - s_i)\right)),$$

where '$\vcenter{\hbox{$\ast$}}$' denotes elementwise product. If the kernel is Gaussian, it can be computed either numerically or in closed form (as Fourier Transform of a Gaussian kernel is also a Gaussian function for any assumed or estimated $\sigma^2$). The remaining required information are the signal-partition-dependent constellation sets $\boldsymbol{O}_i^1$ and $\boldsymbol{O}_i^0$, i=1,...I, and the signal-partition-dependent weights that may be used to reflect a priori probabilities for each state in each partition (see discussion related to Fig. 2). Note that the matrices involved for FFT/IFFT may need to be zero-padded to avoid aliasing or to improve modelling, as in related application in image processing. Zero-padding may be needed if the Gaussian kernel (or some other kernel) has support over multiple neighboring signal states, i.e., SNR is very low. Examples of zero padding are provided in the referred publication Gramacki, J., Gramacki, A. (2017), "A Complete Efficient FFT-Based Algorithm for Nonparametric Kernel Density Estimation"

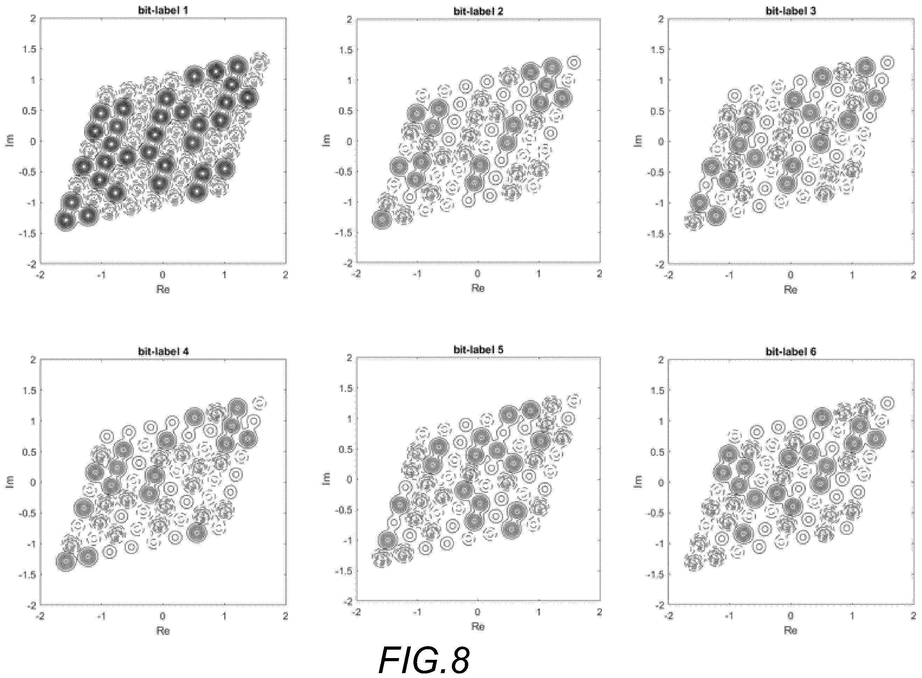

The demapper 115, essentially involving the (fast) convolution-based soft demapper, may perform its functions (e.g., converting received symbols to confidence scores) on every symbol received by the receiver 103. As the amount of information communicated between devices increases, the demapper 115 may contribute to higher consumption of resources (e.g., computing resources, silicon area, etc.) and/or power. Using fast convolution-based demapper 115 may help alleviate the challenges discussed above. For example, fast convolution may be used to reduce complexity of the demapper 115, and to reduce resource and/or power consumption of the demapper 115. In some examples, with a fast convolution or Fourier domain processing, the demapper 115 may be of logarithmic complexity order. Moreover, in certain implementations the complexity does not effectively increase even if the number of states a constellation increases. For example, as will be seen in what follows, the complexity is dependent on quantization resolution rather than on the number of signal states representable within a given quantization resolution, or quantization grid density. Therefore, the basis for computing confidence scores is different from prior art solutions. Additionally or alternatively, since the demapper or the soft demodulator is less affected by number of states, or the actual constellation arrangement, the receiver or the demapper can handle various sorts of transceiver and/or channel impairments since many of those, like constellation change due to I/Q imbalance, or phase noise, can be modelled in the same framework. For example, as illustrated in Fig. 8, if the constellation is deformed due to I/Q imbalance, the deformed constellation is estimated and then provided as input. Or, phase noise, i.e. multiplicative noise, may be modelled by imputing virtual constellation points around constellation points (each with the same label as the selected constellation point) that model phase distribution (rotation) using a discrete (mixture) distribution. Thus, confidence scores, like log-likelihood ratios, explicitly take into account such imperfections. Phase noise and I/Q imbalance may be estimated by conventional means, and merely provided as input to soft demodulator.

For example, a fast convolution-based demapper 115 may comprise or include as input information of effective signal constellation states and labels of each constellation states. The same label may be associated with multiple states, or any state can belong to multiple constellations.

In some examples, a demapper 115 may be configured to determine constellation states.

In some examples, a demapper 115 may comprise fast convolution, and the demapper 115 may be implemented, or comprised, in a 5G/6G/7G receiver (e.g., in a physical downlink shared channel (PDSCH) of the 5G/6G/7G receiver), and the PDSCH throughput of a 5G/6G/7G link may be substantially similar to where demapping functions (e.g., the equations (1) or (2)) are used for demapping.

The demapping function performed by the demapper 115 may comprise, for example, calculating log-likelihood ratios, or a posteriori density values.

Fig. 4 to Fig. 7 illustrate different non-limiting example functionalities, or processes, a computing device, or its receiver, or a receiver component may be configured to perform. In any of the examples described below, the kernel may be for example, a Gaussian kernel or discretized Gaussian kernel, but also alternative kernel definitions that reflect the noise density distribution in the grid may be used. Further, in any of the examples described below, the values of the kernel may depend on at least one parameter of noise, or received signal power, or both on the at least one parameter of noise, or received signal power. The noise may be additive noise or multiplicative noise like phase offset/noise, or the noise may comprise additive noise and multiplicative noise. It should be noted that any of the examples are transparent where a signal or a symbol is obtained. For example, the symbol or signal may be received from a transmitter or from a memory.

Referring to Fig. 4, a signal, which comprises at least one modulated symbol from a labelled symbol constellation, is obtained (block 401). Then, reliability information is determined (block 402) for at least one symbol label or to a part/subset thereof in the labelled symbol constellation, by performing at least one convolution between a kernel and states or a subset of states associated with the labelled symbol constellation. In other words, a reliability information is determined for at least one piece in the labelled symbol constellation, wherein a piece is a symbol label, or a part of a symbol label or a subset comprising parts. The convolution may be a fast convolution, which is a convolution computed separately in at least two marginals using a lower dimensional fast convolution.

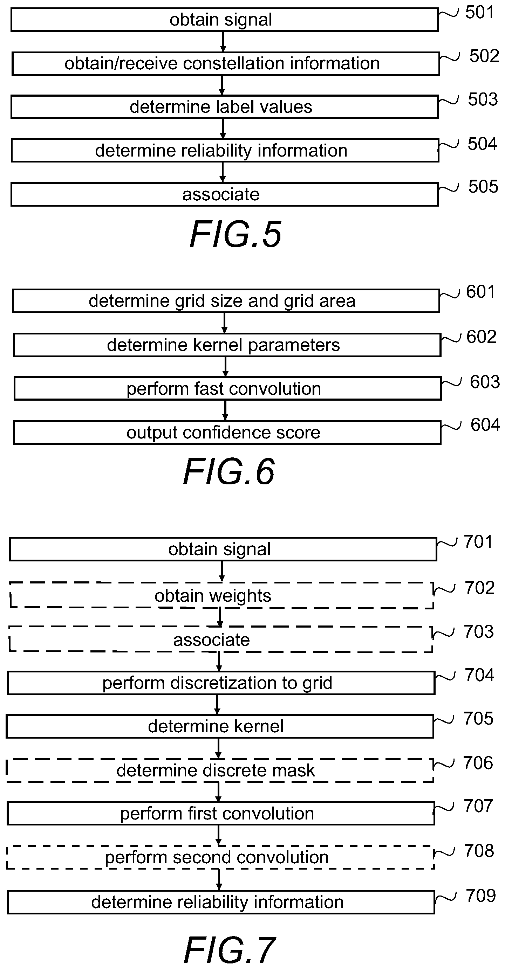

Referring to Fig. 5, a signal, which comprises at least one modulated symbol from a labelled symbol constellation, is obtained (block 501). Constellation information with weights for constellation points is obtained or received (block 502). Then label values for the labelled symbol constellation are determined (block 503) based at least one of a constellation received from a source node of the signal, superposition of two or more constellations, imperfections at the apparatus when the signal is received, or indicated imperfections at the source node. Reliability information is determined (block 504) for at least one symbol label or to a part/subset thereof in the labelled symbol constellation, by performing at least one convolution between a kernel and states or a subset of states associated with the labelled symbol constellation, for example as described with Fig. 4. The reliability information is associated (block 505) with at least one of log likelihood computation and/or for interference cancellation and/or a posteriori mean computation and/or probability density computation and/or for channel estimation.

In another example, based on the example of Fig. 5, blocks 501, 502, 503 and 504 are performed. In a further example, based on the example of Fig. 5, blocks 501, 502 and 504 are performed. In a further example, based on the example of Fig. 5, blocks 501, 503 and 504 are performed. In a further example, based on the example of Fig. 5, blocks 501, 504 and 505 are performed. In a further example, based on the example of Fig. 5, blocks 501, 502, 504 and 505 are performed. In a further example, based on the example of Fig. 5, blocks 501, 503, 504 and 505 are performed.

Referring to Fig. 6, a grid size and grid area representing evaluation points are determined (block 601). For example, for 64QAM, a 512x512 uniform grid in area [-2, 2] in both real and imaginary axis at grid coordinates X and Y (higher density increase computational cost but improves accuracy) may be defined, and signal-state partitions $O_i^1$ and $O_i^0$, i=1,...I, and weights {w}, associated with each state in each partition.

Kernel parameters are also determined (block 602). The kernel parameters may be determined based on SNR or knowledge of noise power $\sigma^2$ affecting signal states $O_i^1$ and $O_i^0$. For example, for 64QAM, a Gaussian kernel K(X,Y) =g*exp(-0.5*(X/$\sigma^2$-Y/$\sigma^2$)).^2, where g is a density normalization factor and $\sigma^2$ is an estimated noise at the receiver, may be determined, and where X, Y are defined on grid points

Fast convolution is then performed (block 603), for example by computing fast convolution in Fourier domain for each signal partition. For example, for BICM, following metacode may be computed:

For all bits i=1,...,I, in grid points X,Y

    For bit values b=0,1

        $F(X,Y,W(O_i^b))$=abs(IFFT(IFFTSHIFT(K(X,Y))) ∷ FFT(w($O_i^b$));

    End

End

The DFT/FFT in block 603 is generally a multi-dimensional DFT/FFT, each evaluated on the same set of (uniform) grid points (e.g. at received signal points, or quantizations thereof to a selected grid).

At the end of the process of Fig. 6, a confidence score is output (block 604), wherein the confidence score may be a result of one of the following:

$LLR(b_i; X,Y)$= log(F(X,Y,W($O_i^1$))/ F(X,Y,W($O_i^0$)))

- A posteriori mean $\text{APP(X,Y)}= \text{F(X,Y,W}(\boldsymbol{O}_i^1))- \text{F(X,Y,W}(\boldsymbol{O}_i^0))$ , or

- Density values at points $\{\text{F(X,Y,W}(\boldsymbol{O}_i^1)),\text{F(X,Y,W}(\boldsymbol{O}_i^0))\}$ , i=1,...,I

It should be noted that any other function described herein may be used to output (and determine/compute) the confidence score. Furthermore, due to linearity APP may be computed using $\text{F(X,Y,W}(\boldsymbol{O}_i^1) - \text{W}(\boldsymbol{O}_i^0))$. This halves the computational effort.

Note that above, the computation of the fast transforms (fast convolutions) is implemented in the same dimension with the constellation. For example, the 64QAM example may be seen as a two dimensional signal, and thus 2D FFT/IFFT is applied. This general approach may be simplified e.g. if the multi-dimensional density (reliability values) can be computed separately from its marginals. For example, if Gray labelling is used, the processing may be confined to Real and Imaginary axes separately, as the joint distribution can be determined from the marginals in product form. In this case, computing of a 2D FFT/IFFT, may be replaced by computing 2 1D FFT/IFFTs, which is significantly less demanding computationally. Metacode for this option may read as follows:

$$\text{For all bits i=1,...,I, in grid points X,Y}$$
$$\text{For bit values b=0,1}$$
$$\text{F\_I(X,Y,W}(\boldsymbol{O}_i^b))=\text{abs(IFFT(IFFTSHIFT(K\_I(X,Y))} \circledast \text{FFT(SUM(w}(\boldsymbol{O}_i^b)));$$
$$\text{F\_Q(X,Y,W(} \boldsymbol{O}_i^b \text{ )}=\text{abs(IFFT(IFFTSHIFT(K\_Q(X,Y))} \circledast \text{FFT(SUM(Transpose(w}(\boldsymbol{O}_i^b))));$$

$$\text{End}$$
$$\text{End}$$

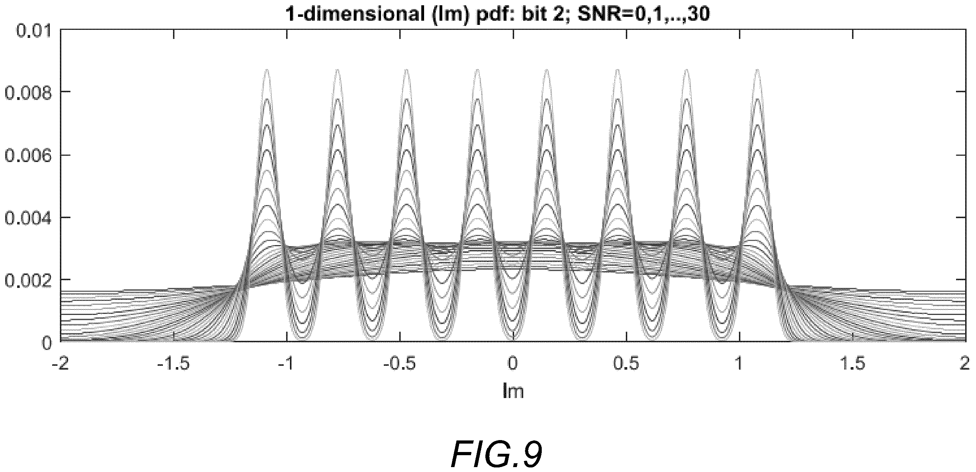

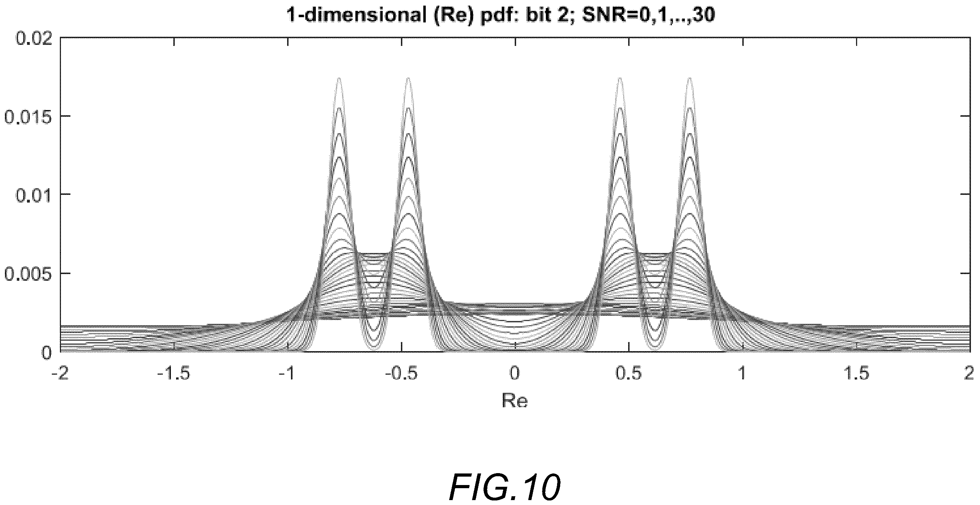

where subscripts I and Q refer to projection (here implemented as SUM(.) operation) of 2D constellation to Real and Imaginary axis, respectively. Similarly for the kernel values. See Fig. 9 and Fig. 10 for one dimensional marginal densities corresponding to bit 2 of the 64 QAM modulator evaluated at different SNR values. The joint density may be computed as a product of marginal densities. Note that here also, whenever SNR changes only the kernel parameter change. If the weights are intact, their values or their transform value may be retrieved from memory. Many of the aforementioned matrices or their fast transforms (fast convolutions) may be saved in memory and retrieved only when needed.

It is to be noted that in the example of Fig. 6 the computation is directed for determining density value or a confidence score for $i^{th}$ bit-label being one a similar procedure obviously applies for other bit values and for other bit labels. If LLR is used as confidence score, there would be with 64QAM, say, 6 bit labels in each state, and 12 density evaluations. However, it is to be noted that the above computational procedure is applicable whenever the signal-partition-dependent constellation sets are provided. These signal partitions need not be related to bit-labels only (binary hypothesis). Therefore, the disclosed solutions may be used also outside BICM-type communication systems and in connection with determining confidence score for any known tagged/labelled signal-partitions.

Discretization of signals is discussed with demodulation and detection problems. Herein, in contrast to prior art, the signal discretization/quantization problem and demodulation/demapping problems are considered in the same framework. Therefore, it is possible to attain significant computational savings, especially when the number of constellation states is large, like in high-order modulation systems. This approach, i.e. considering both discretization and demodulation/demapping, enables efficient computational solutions for fast soft demodulation, and even enables the use of fast convolution operations efficiently implemented e.g. in Graphic Processing Units (GPU), only here for the purpose of signal demodulation, or for signal confidence computation, rather than for images. In the soft demodulation problem discussed herein, fast evaluation of relevant densities is carried out by binning (discretizing) the received signal r to a grid of given density (i.e. with prescribed distances between different grid points) and the conditional densities are evaluated at selected grid points. Typically, a received signal points is represented with greater resolution (more bits) than the grid points, and the grid points are represented (or representable) with higher resolution than the points in the in the signa constellations. In essence, the minimum distances in the sets of possible received signals, different grid points, and different constellation points, respectively, are preferably increasing, or not decreasing. In binning, generally, a received signal may be binned to the closest grid point.

Referring to Fig. 7, a signal, which comprises at least one modulated symbol from a labelled symbol constellation, is obtained (block 701). Then, depending on an implementation, weights for constellation points or different partitions thereof in the labeled constellation may be obtained (block 702) and constellation points or different partitions thereof may be associated (block 703) with the weights. The weights may be obtained by receiving them from an entity in the apparatus and/or by determining the weights in an iteratively manner and/or by receiving them via signaling. In other words, in some implementations blocks 702 and 703 are performed and in some other implementations they are not performed. Then in the example of Fig. 7, discretization of the signal to a grid having a predetermined grid size with a determined density is performed (block 704). The discretization may be performed using the constellation. In implementations in which blocks 702 and 703 are performed, the constellation points with corresponding associated weights may be used. Further, a kernel is determined (block 705) based on information on additive noise and/or multiplicative noise and/or imperfections affecting the received signal, for example. Depending on an implementation, a discrete mask of the signal may be determined (block 706). The size of the discrete mask may be equal to the predetermined grid size. Then a first convolution is performed (block 707) between the kernel and a first set of states of the symbol constellation; and in some implementations, a second convolution is performed (block 708) between the kernel and a second set of states of the symbol constellation. In implementations, in which the discrete mask is determined, performing the first convolution and/or performing the second convolution may comprise calculating a dot product of the Fourier transformed elements of constellation partition weights, or the weights for constellation points, and the Fourier transformed elements of the discrete mask and to use inverse Fourier transformation to the dot product to obtain the convolution output. In the example of Fig. 7, the reliability information associated with the set of labels, i.e., for at least one symbol label or to a part/subset thereof in the labelled symbol constellation, is determined (block 708) based on the output of the at least first convolution, or based on the output of the at least first and the second convolutions.

It should be appreciated that the functionality described with Fig. 5 or Fig. 6 may be combined with the functionality of Fig. 7. For example, constellation information may be obtained, and/or label values determined, as described above with Fig. 5.

In any of the examples described with Fig. 4 to Fig. 7, the grid may be denser than the labeled symbol constellation.

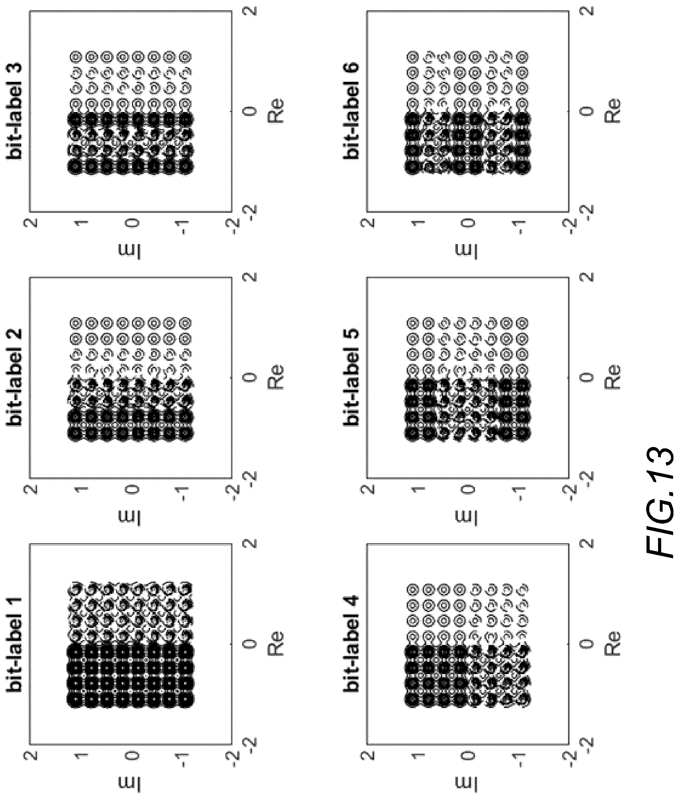

To further clarify the solutions described herein, it is instructive to consider an example of two-dimensional constellation and therefore two-dimensional density computation (d=2). Consider, as a mere example, signal labels defined for 64QAM, where the two dimensions may represent I and Q (real (Re) and imaginary (Im) parts) of the complex symbol, see Fig. 13.

Fig 14 represents the bit densities (see equations (4) and (5)) associated with partitions for each of the 6 bits using labelled 64QAM constellation, computed in this example using size 512x512 grid, with $O_i^1$ and $O_i^0$ each being 512x512 matrices with 32 non-zero equal weight values (each with value 1/32) corresponding to signal state positions. The peaks of mixture densities are in correspondence with associated 64QAM constellation points of Fig. 13

The example in Fig. 15 shows a similar set of densities, only with a priori information that bit-label 1 is 1 with probability 0.75 while other bit-labels are equiprobable. It is seen that a priori information one any given bit(s) affects the densities of all other bits. Such information is pertinent to determining correct confidence scores, for example, in receivers and for individual bit decisions. A priori information in this example effectively is accounted so that for densities for bit -label 1 being 1 (solid-line contours) integrate to 0.75 while for densities for bit -label 1 being 0 integrate to 0.25. As the bits all interlaced in the constellation, this shifts also the densities for all other labels (bit labels 2-6) as well. Hence, the FFT-based soft demapper (soft demodulator) is able to capture densities also in connection with a prior information as well.

Note that if the receiver scales the received signal r to match the constellation partitions (e.g. so that received power is one, for example as in Figs 13-15), and performs phase correction e.g. via maximum ratio combining the computation of the confidence scores, densities, or LLRs can be computed beforehand in some predefined grid area for one or several SNRs (as the solid and dashed contours of Figs. 14-15, for example), and placed in memory. Then, when a new signal arrives, is confidence score can be determined by memory look-up.

Similar partitioning can be done using any signal constellation and labelling, i.e., for any set-partitioning. Furthermore, partitions can be defined sub-symbols, i.e., in this example, for each 6 bit sequences, any pair/triplets/... of labels (effectively sub-symbols partitions), similarly as for each bit, as above. Furthermore, although above noise is independent and has, for simplicity, the same variance in each dimension, this can be easily generalized by a person skilled in the art to account for different covariances.

Even though in the examples an even spaced grid is described, it should be appreciated that the examples may be used with non-uniform grids as well, since a predetermined density (granularity) is an average density (granularity).

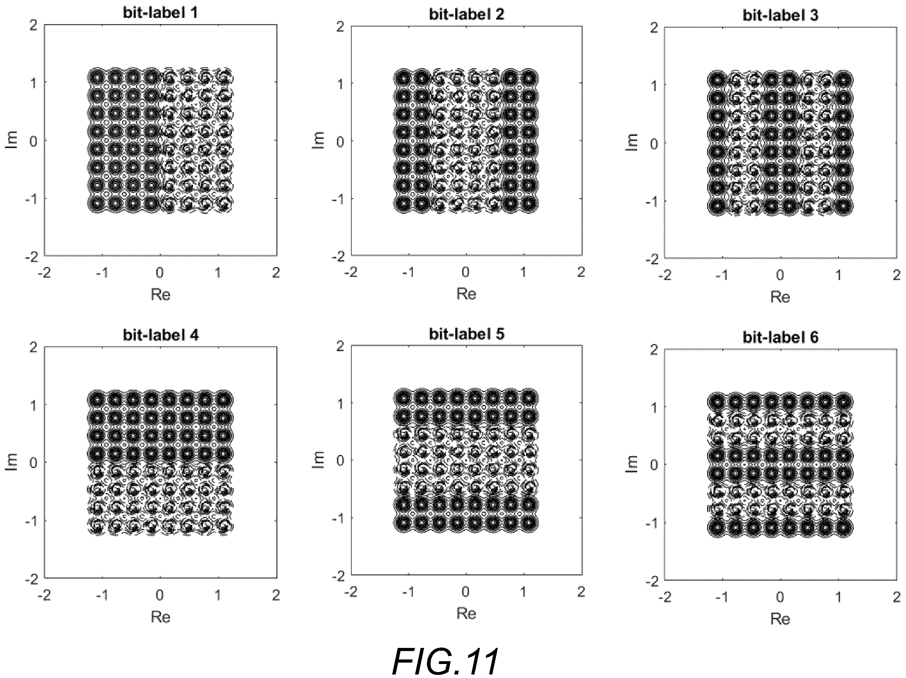

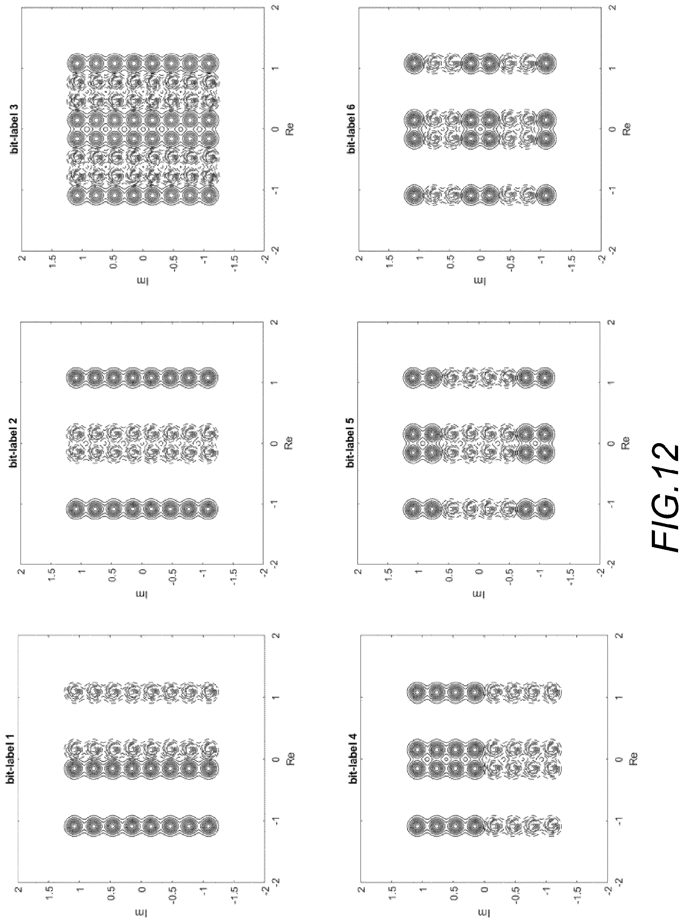

The blocks, related functions, and information acquisitions described above by means of Fig. 1 to Fig. 15 are in no absolute chronological order, and some of them may be performed simultaneously or in an order differing from the given one. Other functions can also be executed between them or within them, and other information may be sent, and/or other rules applied. For example, the accuracy may be validated using more than one test round during which reference signals are transmitted to obtain unused input to the beam prediction model. Some of the blocks or part of the blocks or one or more pieces of information can also be left out or replaced by a corresponding block or part of the block or one or more pieces of information.

In some examples, a computing device may comprise means for receiving a symbol comprising one or more values. The computing device may comprise means for implementing one or more fast demodulators. The computing device may comprise means for demapping, using fast deconvolution and based on the one or more values, the symbol to generate one or more confidence scores corresponding to one or more bits indicated a symbol or symbols. The computing device may comprise means for sending, to a another receiver or transceiver module, such as channel decoder and/or to a channel estimator, the one or more confidence scores. Fast convolution may be implemented e.g by convolving a kernel or a mask over determined signal states, or over multiple subsets of signal states. In some embodiments, the fast convolution may be computed using a fast transform (e.g. DFT, FFT, non-uniform discrete Fourier transform (NUFFT or NUDFT), discrete cosine transform, DCT, or similar transforms, or convolutions, that effectively transform the signal to a different coordinate system) and inverse transforms thereof.

Fig. 16 illustrates an apparatus 1601, that may be configured at least to process a signal according to some embodiments. Fig. 17 illustrates an apparatus that may implement distributed functionality of the apparatus illustrated in Fig. 16. The apparatus may be an electronic device, , in particular a computing device, that may be used in a communication system such as the one shown in Fig. 1, to implement any or all of the transmitter, the receiver, the encoder, the mapper, the modulator, the demodulator, the demapper, the channel estimator, the decoder.

According to an embodiment, there is provided an apparatus comprising at least one processor and at least one memory storing instructions that, when executed by the at least one processor, cause the apparatus at least to: obtain a signal comprising at least one modulated symbol from a labelled symbol constellation; and determine reliability information for at least one piece in the labelled symbol constellation, by performing at least one convolution between a kernel and states or a subset of states associated with the labelled symbol constellation, wherein a piece is a symbol label, or a part of a symbol label or a subset comprising parts.

The apparatus 1601 may comprise one or more communication control circuitry 1620, such as at least one processor, and at least one memory 1630, including one or more algorithms 1631, such as a computer program code (software) wherein the at least one memory and the computer program code (software) are configured, with the at least one processor, to cause the apparatus to carry out any one of the exemplified functionalities of a corresponding apparatus, described above with any of Fig. 1 to Fig. 15. Said at least one memory 1630 may also comprise at least one database 1632.

Referring to Fig. 16, the one or more communication control circuitries 1620 of the apparatus 1601 comprise at least a fast demapper circuitry 1621 which is at least configured to perform determining reliability information, for example confidence scores, for at least one symbol label or to a part/subset thereof in a labelled symbol constellation. To this end, the fast demapper circuitry 1621 of the apparatus 1601 is configured to carry out at least some of the functionalities described above, e.g., by means of Fig. 4 to Fig. 7, using one or more individual circuitries. The fast demapper circuitry may implement fast demapping or fast demodulating and demapping.

Referring to Fig. 16, the memory 1630 may be implemented using any suitable data storage technology, such as semiconductor based memory devices, flash memory, magnetic memory devices and systems, optical memory devices and systems, fixed memory and removable memory. The memory may store precalculated confidence scores, for example.

Referring to Fig. 16, the apparatus 1601 may further comprise different interfaces 1610 such as one or more communication interfaces (TX/RX) comprising hardware and/or software for realizing communication connectivity according to one or more communication protocols and/or for realizing sensing, for example joint communication and sensing. The one or more communication interfaces 1610 may enable connecting to the Internet and/or to a core network of a wireless communications network and/or to a radio access network and/or to other apparatuses within range of the apparatus. The one or more communication interface 1610 may provide the apparatus with communication capabilities to sense and/or transmit sensing signals, and possibly to communicate in a cellular communication system and enable communication to second apparatuses, such as different network nodes or elements or device components, e.g., mobile apparatuses, such as terminal devices or user equipments, for example. The one or more communication interfaces 1610 may comprise standard well-known components such as an amplifier, filter, frequency-converter, (de)modulator, and encoder/decoder circuitries, controlled by the corresponding controlling units, and possibly one or more antennas.

In an embodiment, as shown in Fig. 17, at least some of the functionalities of the apparatus of Fig. 16 may be shared between two physically separate devices, forming one operational entity. Therefore, the apparatus may be seen to depict the operational entity comprising one or more physically separate devices for executing at least some of the described processes. Thus, the apparatus of Fig. 17, utilizing such shared architecture, may comprise a control unit CU 1720, or a remote control unit, such as a host computer or a server computer, operatively coupled (e.g. via a wireless or wired connection) to a remote distributed unit DU 1722 located in the first apparatus or in a remote head of the first apparatus. In an embodiment, at least some of the described processes may be performed by the CU 1720. In an embodiment, the execution of at least some of the described processes may be shared among the DU 1722 and the CU 1720.

Similar to Fig. 16, the apparatus of Fig. 17 may comprise one or more communication control circuitries (CNTL) 1720, such as at least one processor, and at least one memory (MEM) 1730, including one or more algorithms (PROG) 1731, such as a computer program code (software) wherein the at least one memory and the computer program code (software) are configured, with the at least one processor, to cause the apparatus to carry out any one of the exemplified functionalities of the first apparatus, described above, e.g., by means of Fig. 1 to Fig. 15.

In embodiments, the CU 1720 may generate a virtual network through which the CU 1720 communicates with the DU 1722. In general, virtual networking may involve a process of combining hardware and software network resources and network functionality into a single, software-based administrative entity, a virtual network. Network virtualization may involve platform virtualization, often combined with resource virtualization. Network virtualization may be categorized as external virtual networking which combines many networks, or parts of networks, into the server computer or the host computer (e.g. to the CU). External network virtualization is targeted to optimized network sharing. Another category is internal virtual networking which provides network-like functionality to the software containers on a single system. Virtual networking may also be used for testing the terminal device.

In embodiments, the virtual network may provide flexible distribution of operations between the DU and the CU. In practice, any digital signal processing task may be performed in either the DU or the CU and the boundary where the responsibility is shifted between the DU and the CU may be selected according to implementation.

As used in this application, the term 'circuitry' may refer to one or more or all of the following: (a) hardware-only circuit implementations, such as implementations in only analog and/or digital circuitry, and (b) combinations of hardware circuits and software (and/or firmware), such as (as applicable): (i) a combination of analog and/or digital hardware circuit(s) with software/firmware and (ii) any portions of hardware processor(s) with software, including digital signal processor(s), software, and memory(ies) that work together to cause an apparatus, such as a terminal device or an access node, to perform various functions, and (c) hardware circuit(s) and processor(s), such as a microprocessor(s) or a portion of a microprocessor(s), that requires software (e.g. firmware) for operation, but the software may not be present when it is not needed for operation. This definition of 'circuitry' applies to all uses of this term in this application, including any claims. As a further example, as used in this application, the term 'circuitry' also covers an implementation of merely a hardware circuit or processor (or multiple processors) or a portion of a hardware circuit or processor and its (or their) accompanying software and/or firmware. The term 'circuitry' also covers, for example and if applicable to the particular claim element, a baseband integrated circuit for an access node or a terminal device or other computing or network device.

In an embodiment, at least some of the processes described in connection with Fig. 1 to Fig. 15 may be carried out by an apparatus comprising corresponding means for carrying out at least some of the described processes. Some example means for carrying out the processes may include at least one of the following: detector, processor (including dual-core and multiple-core processors), digital signal processor, controller, receiver, transmitter, encoder, decoder, memory, RAM, ROM, software, firmware, display, user interface, display circuitry, user interface circuitry, user interface software, display software, circuit, antenna, antenna circuitry, and circuitry. In an embodiment, the at least one processor, the memory, and the computer program code form processing means or comprises one or more computer program code portions for carrying out one or more operations according to any one of the embodiments of Fig. 1 to Fig. 15 or operations thereof.

Embodiments and examples as described may also be carried out in the form of a computer process defined by a computer program or portions thereof. Embodiments of the functionalities described in connection with Fig. 1 to Fig. 15 may be carried out by executing at least one portion of a computer program comprising corresponding instructions. The computer program may be provided as a computer readable medium comprising program instructions stored thereon or as a non-transitory computer readable medium comprising program instructions stored thereon. The computer program may be in source code form, object code form, or in some intermediate form, and it may be stored in some sort of carrier, which may be any entity or device capable of carrying the program. For example, the computer program may be stored on a computer program distribution medium readable by a computer or a processor. The computer program medium may be, for example but not limited to, a record medium, computer memory, read-only memory, electrical carrier signal, telecommunications signal, and software distribution package, for example. The computer program medium may be a non-transitory medium. The term "non-transitory," as used herein, is a limitation of the medium itself (i.e., tangible, not a signal) as opposed to a limitation on data storage persistency (e.g., RAM vs. ROM). Coding of software for carrying out the embodiments as shown and described is well within the scope of a person of ordinary skill in the art.

Even though the embodiments have been described above with reference to examples according to the accompanying drawings, it is clear that the embodiments are not restricted thereto but can be modified in several ways within the scope of the appended claims. Therefore, all words and expressions should be interpreted broadly and they are intended to illustrate, not to restrict, the embodiment. It will be obvious to a person skilled in the art that, as technology advances, the inventive concept can be implemented in various ways within the scope of independent claims. Further, it is clear to a person skilled in the art that the described embodiments may, but are not required to, be combined with other embodiments in various ways within the scope of independent claims.

**Claims**

1. An apparatus (1601) comprising at least one processor (1620), and at least one memory (1630) including computer program code (1631), wherein the at least one processor (1620) with the at least one memory (1630) and computer program code (1631) cause the apparatus (1601) to:

   obtain a signal comprising at least one modulated symbol from a labelled symbol constellation;
   determine reliability information for at least one piece in the labelled symbol constellation, by performing at least one convolution between a kernel and states or a subset of states associated with the labelled symbol constellation, wherein a piece is a symbol label, or a part of a symbol label or a subset comprising parts;

2. The apparatus of claim 1, wherein the at least one processor (1620), and at least one memory (1630) including computer program code (1631), wherein the at least one processor (1620) with the at least one memory (1630) and computer program code (1631) cause the apparatus (1601) further to:

   perform discretization of the signal to a grid having a predetermined grid size with a determined density;
   determine the kernel based on information on additive noise and/or imperfections affecting the received signal;
   perform a first convolution between the kernel and a first set of states of the symbol constellation; and
   perform a second convolution between the kernel and a second set of states of the symbol constellation;
   determine reliability information associated with the set of labels based on the output the at least first and the second convolutions.

3. The apparatus (1601) of claim 2, wherein the at least one processor (1620) and the at least one memory (1630) including the computer program code (1631), when executed by the at least one processor (1620), further cause the apparatus (1601) to:

   obtain weights for constellation points or different partitions thereof in the labeled symbol constellation; and
   associate constellation points or different partitions thereof with the weights, and
   use the constellation points with corresponding associated weights.

4. The apparatus (1601) of claim 3, wherein the at least one processor (1620) and the at least one memory (1630) including the computer program code (1631), when executed by the at least one processor (1620), further cause the apparatus (1601) to obtain the weights by receiving them from an entity in the apparatus and/or by determining the weights in an iteratively manner.

5. The apparatus (1601) of claim 3 or claim 4, wherein the at least one processor (1620) and the at least one memory (1630) including the computer program code (1631), when executed by the at least one processor (1620), further cause the apparatus (1601) to determine a discrete mask of the signal, and to perform the first convolution and/or the second convolution by calculating a dot product of the Fourier transformed elements of the weights and the Fourier transformed elements of the discrete mask and by using inverse Fourier transformation to the dot product to obtain the convolution output.

6. The apparatus (1601) of any one of claims 2 to 5, wherein the grid is denser than the labeled symbol constellation.

7. The apparatus (1601) of any one of claims 1 to 6, wherein the at least one processor (1620) and the at least one memory (1630) including the computer program code (1631), when executed by the at least one processor (1620), further cause the apparatus (1601) to:
   associate the reliability information with at least one of log likelihood computation and/or for interference cancellation and/or a posteriori mean computation and/or probability density computation and/or for channel estimation.

8. The apparatus (1601) of any one of- claims 1 to 7, wherein the at least one processor (1620) and the at least one memory (1630) including the computer program code (1631), when executed by the at least one processor (1620), further cause the apparatus (1601) to:
   obtain or receive constellation information with weights for constellation points.

9. The apparatus (1601) of any one of claims 1 to 8, wherein the kernel is a Gaussian kernel or discretized Gaussian kernel.

10. The apparatus (1601) of any one of claims 1 to 9, wherein values of the kernel depend on at least one parameter of additive noise, multiplicative noise, or received signal power, or both.

11. The apparatus (1601) of any one of claims 1 to 10, wherein the at least one processor (1620) and the at least one memory (1630) including the computer program code (1631), when executed by the at least one processor (1620), further cause the apparatus (1601) to label values for the labelled symbol constellation based at least one of a constellation received from a source node of the signal, superposition of two or more constellations, imperfections at the apparatus when the signal is received, or indicated imperfections at the source node.

12. The apparatus (1601) of any one of claims 1 to 11, wherein the at least one processor (1620) and the at least one memory (1630) including the computer program code (1631), when executed by the at least one processor (1620), further cause the apparatus (1601) to determine the reliability information by performing the convolution as a fast convolution, in which the convolution is computed separately in at least two marginals using a lower dimensional fast convolution.

13. The apparatus (1601) of any one of claims 1 to 12, wherein the at least one processor (1620) and the at least one memory (1630) including the computer program code (1631), when executed by the at least one processor (1620), further cause the apparatus (1601) to perform binning or quantizing or both binning and quantizing the signal to at least one grid point.

14. A method comprising:

> obtaining (701) a signal comprising at least one modulated symbol from a labelled symbol constellation;
> determining reliability information for at least one piece in the labelled symbol constellation, by performing at least one convolution between a kernel and states or a subset of states associated with the labelled symbol constellation, wherein a piece is a symbol label, or a part of a symbol label or a subset comprising parts.

15. A non-transitory computer readable medium comprising program instructions which, when executed by an apparatus, cause the apparatus to perform at least the method of claim 14.

**FIG.1**

**FIG.2**

FIG.3

FIG.4

| obtain signal | ~ 501 |
| obtain/receive constellation information | ~ 502 |
| determine label values | ~ 503 |
| determine reliability information | ~ 504 |
| associate | ~ 505 |

## FIG.5

| determine grid size and grid area | ~ 601 |
| determine kernel parameters | ~ 602 |
| perform fast convolution | ~ 603 |
| output confidence score | ~ 604 |

## FIG.6

| obtain signal | ~ 701 |
| obtain weights | ~ 702 |
| associate | ~ 703 |
| perform discretization to grid | ~ 704 |
| determine kernel | ~ 705 |
| determine discrete mask | ~ 706 |
| perform first convolution | ~ 707 |
| perform second convolution | ~ 708 |
| determine reliability information | ~ 709 |

## FIG.7

*FIG.8*

1-dimensional (Im) pdf: bit 2; SNR=0,1,..,30

FIG.9

1-dimensional (Re) pdf: bit 2; SNR=0,1,..,30

*FIG.10*

EP 4 611 319 A1

*FIG.11*

FIG.12

*FIG.13*

FIG.14

*FIG.15*

*FIG.16*

*FIG.17*

Europäisches
Patentamt

European
Patent Office

Office européen
des brevets

# EUROPEAN SEARCH REPORT

**Application Number**

EP 25 16 0595

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HEUNCHUL LEE ET AL: "New Approach for Error Compensation in Coded V-BLAST OFDM Systems", IEEE TRANSACTIONS ON COMMUNICATIONS, IEEE SERVICE CENTER, PISCATAWAY, NJ. USA, vol. 55, no. 2, 1 February 2007 (2007-02-01), pages 345-355, XP011165711, ISSN: 0090-6778, DOI: 10.1109/TCOMM.2006.887500 * the whole document * | 1-15 | INV. H04L25/06 |
| X | SITI M ET AL: "On Reduced Complexity Soft-Output MIMO ML detection", IEEE TRANSACTIONS ON INFORMATION THEORY, IEEE, USA, 24 March 2006 (2006-03-24), pages 1-43, XP007904695, ISSN: 0018-9448 * the whole document * | 1-15 | |
| X | CHAO ZHENG ET AL: "Low complexity piecewise linear LLR calculation for MIMO-BICM systems", INFORMATION THEORY (CWIT), 2011 12TH CANADIAN WORKSHOP ON, IEEE, 17 May 2011 (2011-05-17), pages 170-173, XP031944063, DOI: 10.1109/CWIT.2011.5872149 ISBN: 978-1-4577-0743-8 * the whole document * | 1-15 | **TECHNICAL FIELDS SEARCHED (IPC)**<br><br>H04L |

The present search report has been drawn up for all claims

| Place of search | Date of completion of the search | Examiner |
|---|---|---|
| Munich | 6 June 2025 | Baltersee, Jens |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

     .................................................................
& : member of the same patent family, corresponding
    document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- A Complete Efficient FFT-Based Algorithm for Non-parametric Kernel Density Estimation. **GRAMACKI, J.** ; **GRAMACKI, A.** Artificial Intelligence and Soft Computing. ICAISC 2017. Lecture Notes in Computer Science. Springer, 2017, vol. 10246

- **GRAMACKI, J.** ; **GRAMACKI, A.** *A Complete Efficient FFT-Based Algorithm for Nonparametric Kernel Density Estimation*, 2017